# EUROPÄISCHE PATENTSCHRIFT

(11) **EP 3 010 705 B1**
(45) Veröffentlichungstag und Bekanntmachung des Hinweises auf die Patenterteilung: **21.12.2016**
(21) Anmeldenummer: 14723965.1
(22) Anmeldetag: 27.03.2014
(51) Int. Cl.: B29D 23/00, B29C 53/58, F15B 15/14

(54) **ZYLINDERGEHÄUSE IN LEICHTBAU-MISCHBAUWEISE SOWIE VERFAHREN ZUR HERSTELLUNG DESSELBEN**
CYLINDER HOUSING OF LIGHTWEIGHT/HYBRID CONSTRUCTION AND METHOD FOR THE PRODUCTION THEREOF
CARTER DE CYLINDRE EN CONSTRUCTION MIXTE ET LÉGÈRE ET PROCÉDÉ PERMETTANT LA RÉALISATION DUDIT CARTER DE CYLINDRE

(30) Priorität: 28.03.2013 AT 502142013
(43) Veröffentlichungstag der Anmeldung: 27.04.2016
(73) Patentinhaber: Mark Hydraulik GmbH, 4582 Spital am Pyhrn (AT)
(72) Erfinder: BRAUN, Gottfried, A-2435 Ebergassing (AT); MARK, Rudolf, A-4580 Windischgarsten (AT); FIEDLER, Martin, A-1100 Wien (AT)
(74) Vertreter: Burger, Hannes
(86) Internationale Anmeldenummer: PCT/AT2014/050077
(87) Internationale Veröffentlichungsnummer: WO 2014/153587

(56) Entgegenhaltungen:
- WO-A1-91/11319
- GB-A- 2 054 083
- JP-A- H03 236 946
- JP-B- S4 820 032

## Beschreibung

Die Erfindung betrifft ein Zylindergehäuse in Leichtbau-Mischbauweise für einen Druckzylinder, einen Druckzylinder mit einem derartigen Zylindergehäuse sowie ein Verfahren zur Herstellung eines Zylindergehäuses in Leichtbau-Mischbauweise für einen Druckzylinder, wie dies in den Ansprüchen 1, 13 und 14 beschrieben ist.

Ein gattungsgemäß ausgebildetes Zylindergehäuse für einen Druckzylinder in Leichtbau-Mischbauweise ist aus der EP 0 464 202 A1 bekannt geworden. Dieses weist eine Tragstruktur umfassend ein Innenrohr mit in Axialrichtung voneinander distanzierten Enden auf, wobei sich zwischen diesen eine Längsachse erstreckt. Ein erstes und ein zweites Endstück ist jeweils im Bereich eines der Enden des Innenrohrs angeordnet. Eine Verbundstruktur aus einem mit Fäden verstärkten Kunststoff ist an einer Außenfläche des Innenrohrs angeordnet, welche sich in Axialrichtung durchgehend zwischen dem ersten und zweiten Endstück erstreckt und mit diesen verbunden ist. An einer Außenfläche des ersten und des zweiten Endstücks sind jeweils über deren Umfang verteilt mehrere über die Außenfläche vorragende Wickelhilfselemente angeordnet, die stabförmig ausgebildet sind. Die Wickelhilfselemente weisen eine derartige Festigkeit auf, um beim Aufbringen der Fäden der Verbundstruktur einen Wickelvorgang zu ermöglichen, bei dem einzelne der Fäden der Verbundstruktur auf jeweils in Axialrichtung voneinander abgewendeten Seiten in einem Umlenkbereich um zumindest eines der Wickelhilfselemente herumgeführt sind.

Weitere Zylindergehäuse für Druckzylinder in Leichtbau-Mischbauweise mit an deren in Axialrichtung voneinander distanzierte Enden angeordneten Wickelhilfselementen sind aus der JP 03-236 946 A, der JP 03-281 232 A, der JP 61-003732 A sowie der JP 48-200032 A bekannt geworden.

Aus der DE 10 2004 008 523 B4 ist ein Verfahren zur Herstellung eines Druckzylinders und sowie einer Kolbenstange für Aktuatoren oder Stoßdämpfer bekannt geworden. Das Zylindergehäuse ist inForm einer Leichtbau-Mischbauweise ausgebildet und weist eine Tragstruktur umfassend ein Innenrohr, welches in Axialrichtung voneinander distanzierte Enden aufweist, sowie erste und zweite Endstücke, welche jeweils im Bereich eines der Enden des Innenrohrs angeordnet sind. Weiters ist eine Verbundstruktur aus einem mit Fäden verstärkten Kunststoff vorgesehen, welche an einer Außenfläche des Innenrohrs angeordnet ist. Diese erstreckt sich in Axialrichtung durchgehend zwischen den ersten und zweiten Endstücken und ist mit diesen verbunden. Die Kolbenstange weist stirnseitig angeordnete Abschlüsse auf, zwischen welchen sich ein metallisches inneres Zugrohr sowie ein dünnwandiges metallisches äußeres Laufrohr erstrecken, wobei das metallische äußere Laufrohr konzentrisch zu dem metallisch inneren Zugrohr angeordnet ist. Zwischen dem Zugrohr und dem Laufrohr ist weiters ein Kern aus faserverstärkten Kunststoff angeordnet, welcher in radialer Richtung aus rohrförmigen Kernhälften bzw. Kernteilen gebildet ist. Dabei wird auf dem inneren Zugrohr ein erster Kernteil aus dem faserverstärkten Kunststoff und an der Innenseite des äußeren Laufrohrs ein weiterer Kernteil ebenfalls aus faserverstärktem Kunststoff angebracht. Dabei wird eine derartige Außenabmessung des inneren Kernteils gewählt, dass der äußere Kernteil darüber geschoben und anschließend eine Verklebung der beiden Kernteile erfolgen kann. Die jeweils den metallischen Abschlüssen zugewandten Endbereiche des inneren Zugrohrs bzw. des äußeren Laufrohrs werden zur Kraftübertragung mit diesen Bauteilen verschweißt. Die gesamte Kraftübertragung erfolgt dabei ausschließlich über die beiden mit den metallischen Abschlüssen verschweißten Rohre. Nachteilig dabei sind die Ausbildung der Schweißnaht sowie der komplizierte allgemeine Herstellungsvorgang.

Die US 4,704,918 beschreibt eine in Leichtbauweise hergestellte Zug-Druck- und/oder Torsionsstange, bei welcher Anschlussteile voneinander distanziert angeordnet sind und zwischen diesen ein die Distanz überbrückender als Leichtbauteil vorgesehener Kernbauteil angeordnet ist. Diese Baugruppe wird auf ihrer gesamten Länge von einer mit Harz verstärkten Faserlage in Form von geflochtenen Fäden umhüllt. Zusätzlich kann an der äußeren Oberfläche noch eine zusätzliche Beschichtung aus einem weiteren Kunststoffmaterial aufgebracht sein. Bei diesem Herstellvorgang wird das Faden- bzw. Fasergeflecht vor dem Flechtvorgang mit Harz getränkt. Dabei wird der gesamte Arbeitsvorgang wesentlich erschwert, da stets mit einem Fadenmaterial gearbeitet werden muss, welches mit einem noch nicht verfestigten Harz benetzt bzw. getränkt ist.

Der vorliegenden Erfindung liegt die Aufgabe zugrunde, ein Zylindergehäuse in Leichtbau-Mischweise und einen mit einem derartigen Zylindergehäuse ausgestatteten Druckzylinder zu schaffen, welches bzw. welcher einfach und kostengünstig hergestellt werden kann und darüber hinaus eine hohe Haltekraft der Verbundstruktur an den beiden Endstücken erreicht wird, um auch bei hohen Arbeitsdrücken einen sicheren Zusammenhalt der Tragstruktur des Zylindergehäuses zu erzielen. Darüber hinaus soll aber auch ein Verfahren zur Herstellung eines Zylindergehäuses in Leichtbau-Mischweise angegeben werden, bei welchem das Aufbringen der Fäden der Verbundstruktur einfach und sicher erfolgen kann und dabei nachträgliche Bearbeitungsschritte der Verbundstruktur sowie ein Durchtrennen derselben vermieden werden.

Diese Aufgabe der Erfindung wird durch die Merkmale des Anspruches 1 gelöst. Der sich durch die Merkmale des Anspruches 1 ergebende Vorteil liegt darin, dass es dadurch möglich wird, zuerst ein entsprechend ausgebildetes Innenrohr bereit zu stellen, welches in seiner Oberflächenqualität den Anforderungen zur Bildung des Zylinderraums genügt. An dessen Enden werden Endstücke angeordnet, welche zur Führung der Kolbenstange oder zum Anschluss des daraus gebildeten Druckzylinders dienen. Zur gegenseitigen Verbindung der Endstücke wird an der Außenseite des Innenrohrs die Verbundstruktur aus einem mit Fäden verstärktem Kunststoff ausgebildet, welche sich in Axialrichtung durchgehend zwischen den beiden Endstücken erstreckt und mit diesen auch verbunden ist bzw. an diesen Endstücken gehalten ist. Zum Ausbilden bzw. Aufbringen der Fäden der Verbundstruktur sind an einer Außenfläche der ersten und der zweiten Endstücke jeweils mehrere über den Umfang verteilt angeordnete Wickelhilfselemente vorgesehen, welche zur Durchführung des Wickelvorgangs über die Außenfläche vorragen. Damit können mit Hilfe einer Wickelmaschine die Fäden bzw. Fadenbündel zur Ausbildung der Verbundstruktur sowohl am Innenrohr als auch sich zwischen den ersten und zweiten Endstücken erstreckend angeordnet und bereits im späteren Klemmbereich umgelenkt werden. Die Wickelhilfselemente dienen dazu, lediglich den Wickelvorgang durchführen zu können. Diese werden nach dem Ausbilden der Fadenstruktur und noch vor dem Verfestigen des Kunststoffs umgeformt und so in die Fäden der Verbundstruktur hinein verlagert bzw. darin eingebettet.

Da die Fäden bzw. Fadenbündel bereits während des Wickelvorgangs mit einem noch nicht verfestigten Kunststoff beschichtet sind, werden im Zuge des Umformvorganges die einzelnen Wickelhilfselemente auch noch in das nicht verfestigte Kunststoffmaterial eingebettet. Dadurch, dass nun die Wickelhilfselemente nur umgeformt und nicht mehr entfernt werden müssen, fällt auch jegliche Nacharbeit nach dem Bilden der Verbundstruktur durch Verfestigen bzw. Aushärten des Kunststoffs weg. Ein weiterer Vorteil liegt auch noch darin, dass so zwischen den Wickelhilfselementen der beiden Endstücke ein nahezu ununterbrochener Fadenverlauf erreicht werden kann, da die Fäden lediglich im Bereich der Wickelhilfselemente umgelenkt werden und so eine kompakte und vor allem durchlaufende Fadenstruktur innerhalb der Verbundstruktur bzw. des Verbundkörpers erzielt wird. Die Wickelhilfselemente dienen dabei lediglich für die Halterung und Umlenkung der Fäden während des Wickelvorganges und sind in weiterer Folge nach dem Verfestigen bzw. Aushärten des Kunststoffs für eine lastabtragende Funktion nicht mehr zwingend vorgesehen.

Vorteilhaft ist auch eine weitere Ausführungsform nach Anspruch 2, da so durch das Aufteilen der Endstücke jeweils in einen Basisteil sowie einen dazu verlagerbaren Klemmteil, die Wickelhilfselemente am Basisteil angeordnet bzw. gehalten werden können. So kann durch das dazu relativ verlagerbare Klemmteil die Umformung der Wickelhilfselemente und in weiterer Folge auch die Klemmung des Endes der Verbundstruktur sichergestellt werden. Dabei kann das Klemmteil entweder als ständig verbleibender Bauteil des Endstücks dienen oder aber auch nach der Ausbildung und Verfestigung der Verbundstruktur der formgebende Körper entfernt und durch einen eigenen Bauteil ersetzt werden.

Vorteilhaft ist weiters eine Ausbildung nach Anspruch 3, da damit ohne jegliche Zusatzarbeiten die beiden in Axialrichtung voneinander distanzierten Enden der Verbundstruktur mit dem jeweiligen Endstück verbunden werden können.

Durch die Ausbildung nach Anspruch 4 ist es möglich, am Basisteil durch die zueinander unterschiedlich gewählten Neigungen eine formschlüssig wirkende Stützkontur auszubilden, an welcher sich die Innenseite der Verbundstruktur zur Lastübertragung in Axialrichtung formschlüssig daran abstützen kann.

Nach einer anderen Ausführungsvariante gemäß Anspruch 5 wird so eine Beschädigung der Fäden der Verbundstruktur im Bereich der Klemmkontur zwischen dem Klemmteil und dem Basisteil vermieden. Damit kann aber auch ein Aufweiten der Verbundstruktur bei einer Zugbelastung in Axialrichtung vermieden werden.

Vorteilhaft ist auch eine Weiterbildung nach Anspruch 6, da damit eine Beschädigung der äußeren Lagen der Fadenstruktur des Verbundkörpers bzw. der Verbundstruktur am Beginn des Klemmbereiches vermieden wird.

Bei der Ausgestaltung nach Anspruch 7 ist von Vorteil, dass so durch die unterschiedliche Größe der Wahl des Querschnitts am Ende der Verbundstruktur ein umlaufender Wulst geschaffen wird, welcher bei einer Zugbelastung in Form eines Klemmteils wirkt und durch den in Axialrichtung vorgelagerten, jedoch einen kleineren Querschnitt ausgebildeten Klemmbereich, ohne Zerstörung nicht hindurchbewegt werden kann. Damit wird an beiden Endstücken im Bereich von deren Aufnahmekammern eine sichere, formschlüssige Halterung der Verbundstruktur erreicht.

Durch die Weiterbildung nach Anspruch 8 wird erreicht, dass so beim Umformen der Wickelhilfselemente und dem anschließenden Verfüllen der Aufnahmekammer durch den noch fließfähigen Kunststoff Lufteinschlüsse und damit eine Lunkerbildung vermieden wird. Damit kann eine vollständige Füllung der Aufnahmekammer durch den Kunststoff und die Fäden zur Bildung der Verbundstruktur erreicht werden.

Durch die Ausbildung nach Anspruch 9 kann so ohne zusätzliche Hilfsmittel eine einwandfreie, gerichtete Umformung der Wickelhilfselemente hin in Richtung auf die Längsachse erzielt werden. Weiters kann damit aber auch ein unbeabsichtigtes Lösen der um die einzelnen Wickelhilfselemente herumgeführten, umgelenkten Fäden bzw. Fadenbündel während des Wickelvorgangs vermindert werden.

Vorteilhaft ist auch eine Ausbildung nach Anspruch 10, da so die Wickelhilfselemente unabhängig von deren Anordnung vorgefertigt werden können und je nach Größe und Ausbildung des herzustellenden Zylindergehäuses diese in entsprechender Anordnung und Anzahl an den jeweiligen Endstücken angebracht werden können.

Gemäß einer Ausbildung, wie im Anspruch 11 beschrieben, wird erreicht, dass nicht jedes der Wickelhilfselemente am jeweiligen Endstück angeordnet werden muss, da diese mitsamt dem Verbindungselement als Einheit am jeweiligen Endstück angeordnet werden können.

Dabei erweist sich eine Ausgestaltung nach Anspruch 12 vorteilhaft, da so am äußersten Endbereich eine scharfe Kante vermieden wird, welche zu einer Verletzung der Fäden führen kann. Darüber hinaus wird so aber auch die vorragende radiale Höhe der einzelnen Wickelhilfselemente über die äußere Oberfläche des Endstücks, insbesondere dessen Basisteil, reduziert, wodurch für den Wickelvorgang störende Kanten und eine zu große Radialdistanz vermieden wird.

Die Aufgabe der Erfindung wird aber eigenständig auch durch die Merkmale des Anspruches 13 gelöst. Die sich aus der Merkmalskombination dieses Anspruches ergebenden Vorteile liegen darin, dass so eine Einheit geschaffen werden kann, welche auch bei hohen Drücken eine sichere und lange Einsatzdauer aufweist.

Die Aufgabe der Erfindung wird aber unabhängig davon auch durch ein Verfahren zur Herstellung eines Zylindergehäuses für einen Druckzylinder in Leichtbau-Mischbauweise gemäß den im Anspruch 14 angegebenen Merkmalen gelöst. Die sich aus der Merkmalskombination dieses Anspruches ergebenden Vorteile liegen darin, dass es dadurch möglich wird, zuerst ein entsprechend ausgebildetes Innenrohr bereit zu stellen, welches in seiner Oberflächenqualität den Anforderungen zur Bildung des Zylinderraums genügt. An dessen Enden werden Endstücke angeordnet, welche zur Führung der Kolbenstange oder zum Anschluss des daraus gebildeten Druckzylinders dienen. Zur gegenseitigen Verbindung der Endstücke wird an der Außenseite des Innenrohrs die Verbundstruktur aus einem mit Fäden verstärktem Kunststoff ausgebildet, welche sich in Axialrichtung durchgehend zwischen den beiden Endstücken erstreckt und mit diesen auch verbunden ist bzw. an diesen Endstücken gehalten ist. Zum Ausbilden bzw. Aufbringen der Fäden der Verbundstruktur sind an einer Außenfläche der ersten und der zweiten Endstücke jeweils mehrere über den Umfang verteilt angeordnete Wickelhilfselemente vorgesehen, welche zur Durchführung des Wickelvorgangs über die Außenfläche vorragen. Damit können mit Hilfe einer Wickelmaschine die Fäden bzw. Fadenbündel zur Ausbildung der Verbundstruktur sowohl am Innenrohr als auch sich zwischen den ersten und zweiten Endstücken erstreckend angeordnet und bereits im späteren Klemmbereich umgelenkt werden. Die Wickelhilfselemente dienen dazu, lediglich den Wickelvorgang durchführen zu können. Diese werden nach dem Ausbilden der Fadenstruktur und noch vor dem Verfestigen des Kunststoffs umgeformt und so in die Fäden der Verbundstruktur hinein verlagert bzw. darin eingebettet.

Da die Fäden bzw. Fadenbündel bereits während des Wickelvorgangs mit einem noch nicht verfestigten Kunststoff beschichtet sind, werden im Zuge des Umformvorganges die einzelnen Wickelhilfselemente auch noch in das nicht verfestigte Kunststoffmaterial eingebettet. Dadurch, dass nun die Wickelhilfselemente nur umgeformt und nicht mehr entfernt werden müssen, fällt auch jegliche Nacharbeit nach dem Bilden der Verbundstruktur durch Verfestigen bzw. Aushärten des Kunststoffs weg. Ein weiterer Vorteil liegt auch noch darin, dass so zwischen den Wickelhilfselementen der beiden Endstücke ein nahezu ununterbrochener Fadenverlauf erreicht werden kann, da die Fäden lediglich im Bereich der Wickelhilfselemente umgelenkt werden und so eine kompakte und vor allem durchlaufende Fadenstruktur innerhalb der Verbundstruktur bzw. des Verbundkörpers erzielt wird. Die Wickelhilfselemente dienen dabei lediglich für die Halterung und Umlenkung der Fäden während des Wickelvorganges und sind in weiterer Folge nach dem Verfestigen bzw. Aushärten des Kunststoffs für eine lastabtragende Funktion nicht mehr zwingend vorgesehen.

Vorteilhaft ist bei den gewählten Verfahrens schritten nach Anspruch 15, dass so durch das Aufteilen der Endstücke jeweils in einen Basisteil sowie einen dazu verlagerbaren Klemmteil, die Wickelhilfselemente am Basisteil angeordnet bzw. gehalten werden können. So kann durch das dazu relativ verlagerbare Klemmteil die Umformung der Wickelhilfselemente und in weiterer Folge auch die Klemmung des Endes der Verbundstruktur sichergestellt werden. Dabei kann das Klemmteil entweder als ständig verbleibender Bauteil des Endstücks dienen oder aber auch nach der Ausbildung und Verfestigung der Verbundstruktur der formgebende Körper entfernt und durch einen eigenen Bauteil ersetzt werden..

Weiters ist ein Vorgehen gemäß den im Anspruch 16 angegebenen Merkmalen vorteilhaft, weil dadurch bereits nach dem Beenden des Wickelvorganges bis auf das Anbringen des Klemmteils am Basisteil keine zusätzlichen Arbeitsschritte mehr durchgeführt werden müssen, um so eine endgültige Raumform der Verbundstruktur und deren Halterung an den Endstücken zu erreichen.

Eine weitere vorteilhafte Vorgehensweise ist im Anspruch 17 beschrieben, wodurch es noch vor dem Verfestigen des Kunststoffs und dem Einbetten der Fäden es zu einer Straffung der Fadenstruktur kommt. Damit kann ein noch besserer Zusammenhalt bei geringerer Längendehnung zwischen den beiden in Axialrichtung voneinander distanzierten Endstücken erzielt werden.

Vorteilhaft ist auch eine Verfahrensvariante gemäß Anspruch 18, weil damit ohne jegliche Zusatzarbeiten die beiden in Axialrichtung voneinander distanzierten Enden der Verbundstruktur mit dem jeweiligen Endstück verbunden werden können.

Schließlich ist aber auch ein Vorgehen gemäß den im Anspruch 19 angegebenen Merkmalen vorteilhaft, weil dadurch nach der Bildung der Fadenstruktur und dem Erreichen der Klemmstellung zwischen dem Basisteil und dem Klemmteil erst die endgültige Aushärtung des Kunststoffmaterials durchgeführt werden muss. Dadurch kann im Klemmbereich sowie in der Aufnahmekammer eine vollständige Verfüllung erfolgen, wodurch eine voluminöse, massive Ausbildung des Endes der Verbundstruktur nach dem Aushärten erreicht werden kann.

Zum besseren Verständnis der Erfindung wird diese anhand der nachfolgenden Figuren näher erläutert.

Es zeigen jeweils in stark schematisch vereinfachter Darstellung:
- Fig. 1: einen Druckzylinder in schaubildlich vereinfachter Darstellung;
- Fig. 2: einen Axialschnitt durch das Zylindergehäuse des Druckzylinders, jedoch mit entferntem Kolben und teilweise angedeuteter Kolbenstange;
- Fig. 3: ein Ende des Zylindergehäuses nach dem Aufbringen der Fäden der Verbundstruktur, jedoch noch vor dem Erreichen der Klemmstellung des Endstücks für die Verbundstruktur, im Axialschnitt sowie in schaubildlicher vergrößerter Darstellung;
- Fig. 4: Einen Teilbereich des Endes nach Fig. 3 nach dem Aufbringen der Fäden der Verbundstruktur zur Bildung der Tragstruktur, jedoch bei bereits umgeformten Wickelhilfselementen durch das Klemmteil, im Axialschnitt sowie in vergrößerter Darstellung;
- Fig. 5: eine weitere Möglichkeit der Halterung der Wickelhilfselemente an einem diese tragenden Verbindungselement, in schaubildlich vereinfachter Darstellung;
- Fig. 6: eine andere Möglichkeit der Halterung der Wickelhilfselemente an einem diese tragenden ringförmigen Verbindungselement, in schaubildlich vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

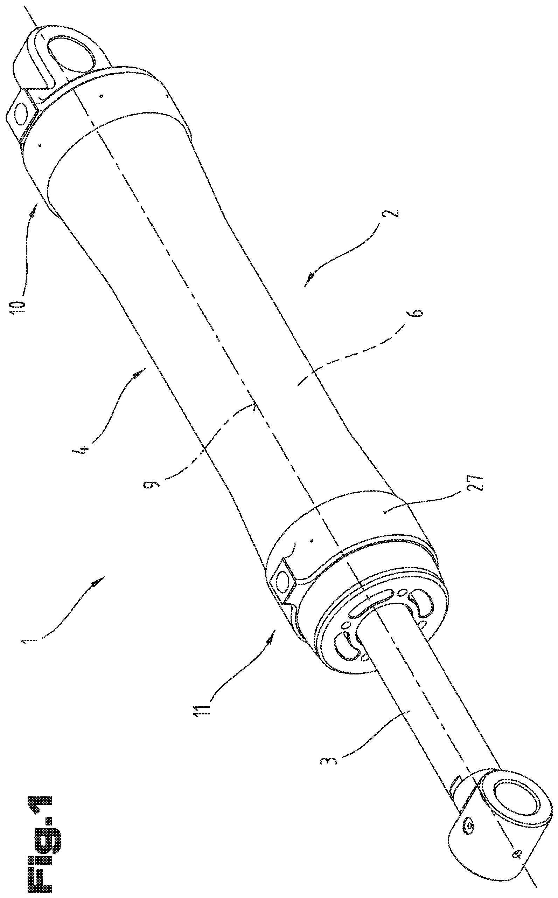

In der Fig. 1 ist vereinfacht ein Arbeitszylinder in Form eines Druckzylinders 1 gezeigt, welcher ein Zylindergehäuse 2 in einer Leichtbau-Mischweise sowie einen hier nicht näher dargestellten Kolben mit einer damit verbundenen Kolbenstange 3 umfasst. Der Druckzylinder kann beispielsweise ein Hydraulikzylinder, Pneumatikzylinder oder Hydropneumatikzylinder sein. Weiters kann der Druckzylinder als doppeltwirkender Zylinder, Differenzialzylinder, Gleichlaufzylinder, Tandemzylinder, einfachwirkender Zylinder, Plungerzylinder oder Teleskopzylinder ausgebildet sein.

Einen Aspekt der vorliegenden Erfindung stellt das Zylindergehäuse 2 für sich dar. Einen weiteren Aspekt der Erfindung kann der Druckzylinder 1 mit einem derartigen Zylindergehäuse 2 sowie dem darin aufgenommenen Kolben mit Kolbenstange darstellen. Einen weiteren Aspekt der Erfindung kann aber auch noch das Verfahren zur Herstellung des Zylindergehäuses 2 bilden.

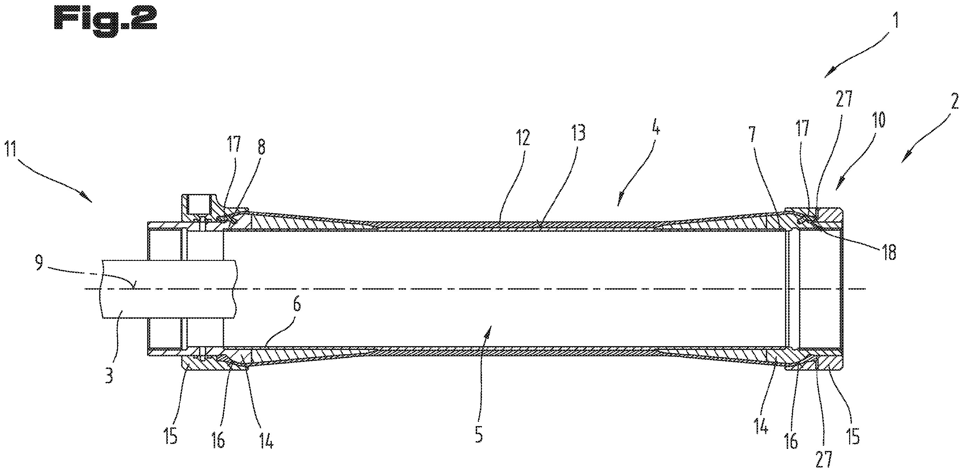

In den Fig. 2 bis 4 ist das Zylindergehäuse 2 zur Bildung des Druckzylinders 1 in verschiedenen Ansichten und Schnitten dargestellt, um dessen Aufbau besser beschreiben zu können.

Das Zylindergehäuse 2 ist dabei aus einer Mehrzahl von unterschiedlichen Komponenten zusammengesetzt bzw. gebildet, wobei hier versucht wird, eine sogenannte Leichtbau-Mischweise zu realisieren. Dabei soll speziell beim Zylinderrohr eine hohe Gewichtseinsparung erzielt werden und trotzdem derartige Zylindergehäuse 2 auch bei relativ hohen Arbeitsdrücken sowie in großer Bauform betreiben und ausbilden zu können.

So umfasst das Zylindergehäuse 2 eine Tragstruktur 4, welche einen Zylinderraum 5 zur Aufnahme des hier nicht näher dargestellten Kolbens sowie eines Teils der Kolbenstange 3 aufweist.

Die Tragstruktur 4 umfasst ein Innenrohr 6, welches in Axialrichtung voneinander distanzierte Enden 7, 8 aufweist. Zumeist handelt es sich dabei um ein Metallrohr, welches an seiner dem Zylinderraum 5 zugewendeten Oberfläche eine zur Führung und Dichtung entsprechend ausgebildete Oberflächenqualität aufweist. Zwischen den beiden in Axialrichtung voneinander distanzierten Enden 7, 8 erstreckt sich eine Längsachse 9, welche ein Zentrum des Innenrohrs 6 bzw. der Tragstruktur 4 definiert. Weiters ist hier vorgesehen, dass im Bereich des ersten Endes 7 des Innenrohrs 6 ein erstes Endstück 10 sowie im Bereich des zweiten Endes 8 ein zweites Endstück 11 angeordnet ist.

Weiters umfasst die Tragstruktur 4 eine Verbundstruktur 12 aus einem mit nicht näher bezeichneten Fäden verstärkten Kunststoff. Der Einfachheit halber ist die Verbundstruktur 12 als ein einziger Baukörper dargestellt, welcher jedoch durch zueinander unterschiedlichst angeordnete bzw. unterschiedlichst zueinander verlaufende Fäden bzw. Fadenlagen gebildet ist, welche anschließend nach Aufbringen bzw. Wickeln der Fäden zu einem über den Kunststoff zusammengehaltenen Bauteil verfestigt werden. So kann die Verbundstruktur 12 auch mehrere unterschiedlichst zueinander angeordnete bzw. ausgerichtete Lagen an Fäden bzw. Fadenbündel aufweisen. Es können einzelne der Lagen mit einer Wicklungsausrichtung von ca. 90° bezüglich der Längsachse 9 vorgesehen sein. Diese rundum durchlaufenden Fäden bilden eine Lage, welche einem Radialdruck von innen einen hohen Widerstand entgegengesetzt und derartige Kräfte aufnimmt. Dabei kommt es zu einem Stützen des Innenrohrs 6 an dessen Außenfläche 13. Diese Lage ist zumeist auch die erste bzw. innerste Lage der Verbundstruktur 12.

Um die beiden Endstücke 10, 11 auch in Axialrichtung relativ zueinander positioniert in einem bestimmten Abstand halten zu können, können weitere Fadenlagen vorgesehen sein, welche eine Art Längswickel ausbilden. Dabei können die einzelnen Fäden bzw. Fadenbündel zur Bildung des Längswickels in einem Winkelbereich zwischen 0° und 30°, insbesondere zwischen 0° und 10° bezüglich der Längsachse 9 geneigt zu dieser verlaufend auf der vom Zylinderraum 5 abgewendeten Seite des Innenrohrs 6 angeordnet bzw. vorgesehen sein. Um einen zusätzlichen, radialen Halt bzw. Zusammenhalt der den Längswickel bildenden Fäden bzw. Fadenbündel zu erreichen, kann die oberste Lage ebenfalls wieder eine Wickelausrichtung aufweisen, bei der die einzelnen Fäden in etwa 90° bezüglich der Längsachse 9 sowohl nebeneinander als auch übereinander angeordnet sein können. Es sind dabei zumindest die Fäden bzw. Fadenbündel der Längslage durchgehend zwischen den ersten und zweiten Endstücken 10, 11 erstreckend ausgerichtet und jeweils mit diesen verbunden, um so eine vorgegebene Distanz zwischen den beiden Endstücken 10, 11 in Abhängigkeit vom Innenrohr 6 festlegen zu können.

Dabei sei erwähnt, dass die zuvor beschriebenen Längslagen bzw. Längswickel als auch die in einem Winkel von ca. 90° bezüglich der Längsachse 9 verlaufenden Querwickel auch in abwechselnder Reihenfolge mehrfach übereinander angeordnet bzw. vorgesehen sein können. Als oberste bzw. äußerste Lage wird bevorzugt eine Umfangswickellage vorgesehen, welche einen Winkel von ca. 90° bezüglich der Längsachse 9 mit dieser einschließt.

Grundsätzlich ist der Aufbau und die Anordnung der Anbindung der Verbundstruktur 12 an das erste sowie zweite Endstück 10, 11 zueinander gleichartig aufgebaut, wobei nachfolgend der besseren Übersichtlichkeit halber, nur das bodenseitige Ende des Zylindergehäuses 2 mit seinem ersten Endstück 10 dargestellt und näher beschrieben wird.

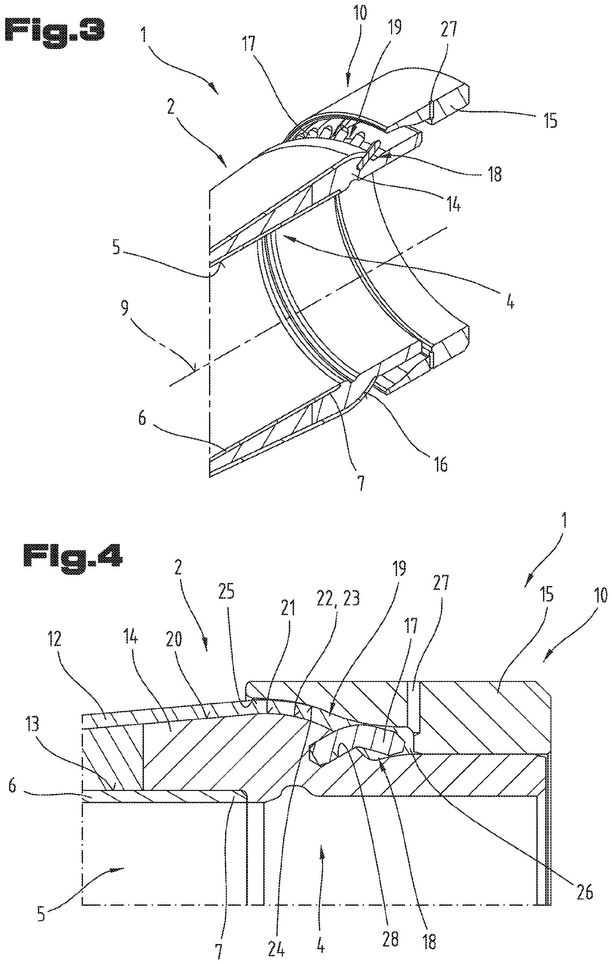

So zeigen die Fig. 3 und 4 einen Axialschnitt in schaubildlicher Darstellung im Bereich des ersten Endes 7 des Innenrohrs 6 mit dem daran gehaltenen, ersten Endstück 10. Die hier für das erste Endstück 10 beschriebenen Ausführungen gelten in äquivalenter Weise auch für das zweite Endstück 11, wobei die Ausrichtungen und Anordnungen der Bauteile zueinander jeweils in entgegengesetzter Ausrichtung bezüglich der Axialrichtung des Zylindergehäuses 2 erfolgen.

Da im Betrieb derartiger Druckzylinder 1 nicht nur ein hoher Radialdruck, ausgehend vom Zylinderraum 5 hin auf das Innenrohr 6 und weiter in die Tragstruktur 4, sondern auch eine Axialkraft zwischen den beiden Endstücken 10, 11 zu übertragen ist, kommt der Tragstruktur 4, insbesondere der Verbundstruktur 12, ein hoher Stellenwert zu. Deshalb ist die Halterung der Verbundstruktur 12 und damit die Verbindung zwischen dem ersten und dem zweiten Endstück 10, 11 von besonderer Bedeutung. Deshalb ist die Verbundstruktur 12 sich in Axialrichtung durchgehend zwischen dem ersten und zweiten Endstück 10, 11 erstreckend auszubilden.

Bei diesem hier gezeigten Ausführungsbeispiel umfasst sowohl das erste Endstück 10 als auch das zweite Endstück 11 jeweils einen Basisteil 14 sowie einen relativ dazu verlagerbaren Klemmteil 15. Unter relativ dazu verlagerbar wird eine Verlagerung in Axialrichtung verstanden. Darüber hinaus kann bei Verwendung einer nicht näher dargestellten bzw. bezeichneten Gewindeanordnung zwischen dem Basisteil 14 und dem Klemmteil 15 auch noch eine rotatorische Bewegung um die Längsachse 9 erfolgen, um die Axialbewegung zwischen diesen beiden Teilen 14, 15 in formschlüssiger Bewegung zu bewerkstelligen. Zumeist wird die Verbundstruktur 12 an den Endstücken 10, 11 ortsfest gehalten und das Klemmteil 15 relativ dazu verlagert. Das Basisteil 14 ist der Längsachse 9 näher liegend und somit innerhalb des außen angeordneten Klemmteils 15 angeordnet, welcher Klemmteil das Basisteil 14 zumindest bereichsweise außen übergreift.

Bei den bislang eingesetzten Wickelverfahren wurde zumeist derart vorgegangen, dass die die Verbundstruktur 12 bildenden Fäden bzw. Fadenbündel in Axialrichtung jeweils auf die voneinander abgewendete Seite über die Endstücke 10, 11 hinaus erstreckend angeordnet wurden, um an extern angeordneten Hilfsdornen eine Umlenkung der einzelnen Fäden bzw. Fadenbündel zu erreichen. So konnten die Längslagen bzw. Längswickel ausgebildet werden. Nach entsprechender Aushärtung bzw. Verfestigung des Kunststoffes und dem damit verbundenen Einbetten der Fäden in den Kunststoff wurde an einer vorbestimmten Stelle der Überstand der zuvor hergestellten Verbundstruktur abgetrennt, wodurch ein rundum durchlaufendes Unterbrechen und damit Abtrennen der einzelnen Fäden im Trennquerschnitt erfolgt ist.

Bei dieser hier dargestellten Ausbildung des ersten Endstücks 10 ist vorgesehen, dass an dessen Außenfläche 16, insbesondere dessen Basisteil 14, jeweils mehrere über den Umfang verteilt angeordnete Wickelhilfselemente 17 vorgesehen sind. Dabei ragen die Wickelhilfselemente 17 über die Außenfläche 16 des Endstücks 10, insbesondere des Basisteils 14, vor. Die einzelnen Wickelhilfselemente 17 sind im vorliegenden Ausführungsbeispiel stab- bzw. stiftförmig ausgebildet und dienen dazu, während des Aufbringens der Fäden der Verbundstruktur 12 den dazu notwendigen Wickelvorgang zu ermöglichen. Dazu weisen die Wickelhilfselemente 17 eine derartige Festigkeit auf, dass der Wickelvorgang in bekannter Weise erfolgen kann. Beim Wickelvorgen werden einzelne der Fäden der Verbundstruktur 12 auf jeweils in Axialrichtung voneinander abgewendeten Seiten in einem Umlenkbereich 18 um eines der Wickelhilfselemente 17 herumgeführt und so die Fäden bzw. Fadenbündel in der noch nicht verfestigten Zustandsform des Kunststoffs ortsfest am Basisteil 14 des ersten Endstücks 10 gehalten sind. Dabei können die Wickelhilfselemente 17 auch als Pins bezeichnet werden. In der Wickelphase der Fäden bzw. Fadenbündel durchragen bzw. überragen die Wickelhilfselemente 17 die herzustellende Verbundstruktur 12. Dadurch wird bis zum später noch beschriebenen Umformvorgang der einzelnen Wickelhilfselemente 17 durch das Klemmteil 15 eine sichere Halterung der Fäden oder Fadenbündel am Basisteil 14 erreicht.

Die Wickelhilfselemente 17 müssen, wie dies später noch beschrieben wird, umformbar ausgebildet sein, keine scharfen Kanten aufweisen und auch keine zu hohe Sprödigkeit aufweisen, um bei der Umformung nicht abzubrechen. Zumeist wird bzw. werden die Wickelhilfselemente 17 aus einem Kunststoffmaterial mit entsprechenden Eigenschaften ausgebildet, welche jedoch ausschließlich dazu dienen, die Fäden während des Wickelvorgangs am Basisteil 14 positioniert zu halten, jedoch keinen maßgeblichen Anteil an der Kraftübertragung der Verbundstruktur 12 hin zu den beiden Endstücken 10, 11 beitragen. Durch den zumeist geneigt bezüglich der Längsachse 9 ausgerichteten Längsverlauf der Fäden der Verbundstruktur 12 zwischen den beiden Basisteilen 14 der Endstücke 10, 11 wird der Faden bzw. das Fadenbündel im äußeren Umlenkbereich 18 um eines der Wickelhilfselemente herumgeführt und umgelenkt, in weiterer Folge in Umfangsrichtung weitergeführt und in einem anderen Umlenkbereich 18 um ein anderes der Wickelhilfselemente 17 wiederum herumgeführt, sodass der Faden unter der vorgewählten, zuvor beschriebenen Neigung bezüglich der Längsachse 9 hin zu einem weiteren Wickelhilfselement 17 des zweiten Endstücks 11 bzw. Basisteils 14 desselben geführt und dort wiederum entsprechend umgelenkt wird.

Wie nun besser aus der Fig. 4 zu ersehen ist, befindet sich das Klemmteil 15 relativ bezüglich des Basisteils 14 in einer sogenannten Klemmstellung. Diese relative Positionierung des Klemmteils 15 bezüglich des Basisteils 14 erfolgt erst nach vollständiger Ausbildung der noch nicht verfestigten Verbundstruktur 12 bzw. deren Fäden. Das Aufbringen des Kunststoffmaterials zur Bildung der Verbundstruktur 12 kann beispielsweise im Zuge des Wickelvorgangs durch bereits damit beschichtete Fäden bzw. Fadenbündel oder aber auch durch eine nachträgliche Beschichtung und/oder Tränkung der Fäden erfolgen. Bevorzugt wird jedoch ein mit einem noch nicht verfestigten Kunststoff beschichteter bzw. getränkter Faden bzw. Fadenbündel verwendet, um so auch im unmittelbaren Nahbereich des Innenrohrs 6 sowie der Basisteile 14 der Endstücke 10, 11 eine entsprechende Menge an Kunststoff zur Einbettung der Fäden und Ausbildung der Verbundstruktur 12 bereitgestellt zu haben. Im Zuge der Axialverstellung des Klemmteils 15 relativ bezüglich des Basisteils 14 werden nach der Ausbildung der Verbundstruktur 12 die Wickelhilfselemente 17 umgeformt und zumindest bereichsweise in die Verbundstruktur 12 eingebettet.

Wie nun weiters aus der Fig. 4 zu ersehen ist, befindet sich das Klemmteil 15 in der mit dem Basisteil 14 eingenommenen Klemmstellung, wobei zwischen dem Basisteil 14 und dem Klemmteil 15 ein umlaufender Aufnahmeraum 19 ausgebildet ist, in welchem das Ende der Verbundstruktur 12 sowie die umgeformten Wickelhilfselemente 17 aufgenommen sind. Das Basisteil 14 ist auf das Ende 7 des Innenrohrs 6 unter Ausbildung einer Schulter darauf aufgeschoben, wobei hier keine feststehende Verbindung zwischen dem Basisteil 14 und dem Ende 7 des Innenrohrs 6 vorgesehen ist (Schiebesitz).

Im Axialschnitt gesehen weist das Basisteil 14 eine auf die vom Innenrohr 6 abgewendete Seite ansteigend verlaufende Anlaufschräge 20 auf, die weiters in radialer Richtung von der Außenfläche 13 des Innenrohrs 6 distanziert verlaufend angeordnet sein kann. An der vom Zylinderraum 5 abgewendeten Seite der Anlaufschräge 20 schließt ein Übergangsabschnitt 21 daran an, welcher in einer maximalen, radialen Distanz bezüglich der Längsachse 9 angeordnet bzw. ausgebildet ist. An diesen Übergangsabschnitt 21 anschließend ist eine abfallend gekrümmt verlaufend ausgebildete Stützkurve 22 vorgesehen, wobei im Endbereich der Stützkurve 22 auch die zuvor beschriebenen Wickelhilfselemente 17 angeordnet bzw. gehalten sein können. Weiters bildet die Anlaufschräge 20, der Übergangsabschnitt 21 und die daran anschließende Stützkurve 22 eine sich über den Umfang erstreckende Stützkontur 23 für die Innenseite der Verbundstruktur 12 aus.

Das Klemmteil 15 dient zur Festlegung und halternden Klemmung der Verbundstruktur 12, um so die Axialkräfte zwischen den beiden Endstücken 10, 11 übertragen zu können. Dazu weist das Klemmteil 15 zumindest in einem dem Übergangsabschnitt 21 sowie einem daran anschließenden Teilabschnitt der Stützkurve 22 gegenüberliegenden Bereich eine parallel dazu auf die von der Längsachse 9 abgewendete Seite versetzt verlaufende Klemmkontur 24 auf. Dabei entspricht das Ausmaß der radialen Versetzung in etwa einer Lagenstärke der Fäden der Verbundstruktur 12 in diesem Bereich. Um ein Abklemmen bzw. Verquetschen der Fäden im Einlaufbereich der Verbundstruktur 12 in das Klemmteil 15 zu vermeiden, kann im Axialschnitt gesehen das Klemmteil 15 am Beginn seiner dem Übergangsabschnitt 21 gegenüberliegenden Klemmkontur 24 eine Einlauferweiterung 25 aufweisen. Dabei wird eine Querschnittsvergrößerung zwischen der Stützkontur 23 und der Klemmkontur 24 erzielt

Weiters weist im Axialschnitt gesehen der Querschnitt des Aufnahmeraums 19 im Bereich des Übergangsabschnitts 21 und dem daran anschließenden Teilabschnitt der Stützkurve 22 eine kleinere Größe auf als jener Querschnitt in dem in Axialrichtung davon distanziert angeordneten Umlenkbereich 18 der Fäden der Verbundstruktur 12 um die Wickelhilfselemente 17. Dadurch bildet sich im Umlenkbereich 18 der Fäden der Verbundstruktur 12 um die Wickelhilfselemente 17 zwischen dem Basisteil 14 und dem Klemmteil 15 eine Aufnahmekammer 26 aus. Weiters kann die Aufnahmekammer 26 über zumindest einen im Klemmteil 15 angeordneten Kanal 27 mit der äußeren Umgebung verbunden sein. Der oder die Kanäle 27 dienen dazu, um während der relativen axialen Verstellung bzw. Verlagerung des Klemmteils 15 hin in die Klemmstellung bezüglich des Basisteils 14 überschüssiges, fließfähiges Kunststoffmaterial aus der Aufnahmekammer 26 abströmen lassen zu können. Dadurch kann aber auch noch gegebenenfalls in der Aufnahmekammer 26 eingeschlossene Luft abströmen, um so eine lunkerfreie Verbundstruktur 12 aus Fäden sowie Kunststoffmaterial zu erhalten.

Um einerseits einen ordnungsgemäßen Wickelvorgang der Fäden und ein weiteres Herumführen derselben um die Wickelhilfselemente 17 zu ermöglichen, sind die Wickelhilfselemente 17 bezüglich der Längsachse 9 geneigt zu dieser verlaufend angeordnet. Diese geneigte Schrägstellung der Wickelhilfselemente 17 dient aber auch noch dazu, um den zuvor beschriebenen Umformvorgang des über die Außenfläche 13 vorragenden Abschnitts der Wickelhilfselemente 17 durchführen zu können. Dabei hat sich ein Neigungswinkel zwischen 30° und 45° bezüglich der Längsachse 9 als günstig erwiesen. Des Weiteren ist die Richtung der Neigung derart gewählt, dass diese jeweils auf die voneinander abgewendete Seite der Wickelhilfselemente 17 ansteigend geneigt verlaufend ausgerichtet sind.

Die Halterung der Wickelhilfselemente 17 an den Endstücken 10, 11, insbesondere dessen Basisteilen 14, kann unterschiedlichst erfolgen. Im hier gezeigten Ausführungsbeispiel kann jedes der einzelnen Wickelhilfselemente 17 einzeln in eine dafür am jeweiligen Basisteil 14 des Endstücks 10, 11 ausgebildete Aufnahmeöffnung 28 eingesetzt und bevorzugt feststehend darin gehalten sein.

Weiters kann jedes der Wickelhilfselemente 17 an seinem vom Basisteil 14 des Endstücks 10, 11 abgewendeten Endbereich 29 eine Abfasung mit einer Fasenfläche 30 aufweisen. Bevorzugt ist die Fasenfläche 30 rundum durchlaufend ausgebildet. Weiters kann im Axialschnitt gesehen die Fasenfläche 30 an ihrer von der Längsachse 9 abgewendeten Seite in etwa parallel bezüglich der am Basisteil 14 ausgebildeten Anlaufschräge 20 verlaufend ausgerichtet sein. Dies deshalb, da so bei einem Wickelvorgang keine störende, scharfe Kante auf die von der Längsachse 9 abgewendete Seite des Wickelhilfselements 17 vorragt.

Wie bereits zuvor beschrieben, wird die äußerste bzw. oberste Lage der Fäden der Verbundstruktur, welche eine Umfangswicklung darstellen, über die gesamten Längslagen bis unmittelbar vor die Wickelhilfselemente 17 im Bereich der beiden Endstücke 10, 11 aufgebracht bzw. angeordnet. Damit wird ein radiales Ausweichen der die Längslagen bildenden Fäden bzw. Fadenbündel verhindert.

Bei der Herstellung des Zylindergehäuses 2 für den Druckzylinder 1 kann ein Verfahren angewandt werden, bei dem die Tragstruktur 4 umfassend das Innenrohr 6 mit den in Axialrichtung voneinander distanzierten Enden 7, 8, das erste und zweite Endstück 10, 11 sowie die Verbundstruktur 12 gebildet wird. Dabei werden am Innenrohr 6 jeweils im Bereich eines der Enden 7, 8 das erste und zweite Endstück 10, 11 angeordnet. Die Verbundstruktur 12 wird aus einem mit Fäden bzw. Fadenbündel verstärkten Kunststoff gebildet, welche an der Außenfläche 13 des Innenrohrs 6 aufgebracht wird. Dabei wird die Verbundstruktur 12 sich in Axialrichtung durchgehend zwischen dem ersten und zweiten Endstück 10, 11 erstreckend ausgebildet und zusätzlich noch mit dem ersten und zweiten Endstück 10, 11 verbunden.

Des Weitern werden an der Außenfläche 16 des ersten und zweiten Endstücks 10, 11 an deren Umfang verteilt mehrere über die Außenfläche 16 vorragende Wickelhilfselemente 17 angeordnet. Beim Aufbringen der Fäden der Verbundstruktur 12 im Zuge des Wickelvorgangs werden die zuvor beschriebenen Fäden zur Bildung der Längslagen als auch die Fäden zur Bildung der Umfangs- bzw. Querlagen auf der Tragstruktur 4 mit dem Innenrohr 6 sowie dem ersten und zweiten Endstück 10, 11 aufgebracht. Im Umlenkbereich 18 werden die Fäden bzw. Fadenbündel jeweils um eines der Wickelhilfselemente 17 herumgeführt, bedarfsweise in Umfangsrichtung sich über mehrere Wickelhilfselemente 17 erstreckend weitergeführt und anschließend über ein davon distanziertes weiteres Wickelhilfselement 17 wiederum hin zum jeweils anderen Endstück 10, 11 geführt. Dadurch, dass das Endstück 10, 11 durch das Basisteil 14 sowie das relativ dazu verlagerbare Klemmteil 15 gebildet wird, werden die Wickelhilfsmittel 17 bevorzugt am Basisteil 14 des Endstücks 10, 11 angeordnet. Es wäre aber auch möglich, den oder die Fäden nur um eines der Wickelhilfselemente 17 um einen Winkel von ca. 180° herumzuschlingen und direkt unter dem vorbestimmten Längswickelwinkel bezüglich der Längsachse 9 zu einem am anderen Endstück 11,10 angeordneten Wickelhilfselement 17 zu führen.

Sind die Fäden zur Bildung der Verbundstruktur 12 aufgewickelt bzw. aufgebracht, wird das Klemmteil 15, beispielsweise in Form eines Schraubvorgangs, über eine zusammenwirkende Gewindeanordnung auf das Basisteil 14 aufgeschraubt. Durch diese axiale, relative Verlagerung zueinander werden zuerst die über die Fäden der Verbundstruktur 12 vorragenden Wickelhilfselemente 17 umgeformt und dabei durch deren bereits schräge Ausrichtung bezüglich der Längsachse 9 hin in Richtung auf die Längsachse 9 umgeformt. Dabei erfolgt ein Einbetten und/oder Eindrücken der einzelnen Wickelhilfselemente 17 in die Fäden sowie das noch nicht verfestigte Kunststoffmaterial der Verbundstruktur 12.

Wird das Klemmteil 15 noch weiter in Axialrichtung relativ bezüglich des Basisteils 14 verlagert, wird die sogenannte Klemmstellung zwischen dem Basisteil 14 und dem Klemmteil 15 erreicht. Bei Erreichen dieser Klemmstellung wird zwischen der Stützkontur 23 des Basisteils 14 und der Klemmkontur 24 des Klemmteils 15 ein Spalt ausgebildet, bei dem im Axialschnitt gesehen, die radiale Distanz in etwa der Lagenstärke der Fäden der Verbundstruktur 12 entspricht.

Durch das Vorsehen der im Querschnitt dazu größeren Aufnahmekammer 26 im Umlenkbereich 18 der Fäden der Verbundstruktur 12 um die Wickelhilfselemente 17 können in dieser Aufnahmekammer 26 die umgeformten Endbereiche 29 der einzelnen Wickelhilfselemente 17 aufgenommen werden. Weiters wird durch die im Querschnitt gesehen größere Aufnahmekammer 26 am Ende der Verbundstruktur 12 eine Art Klemmkeil bzw. Klemmwulst ausgebildet. Nach dem Aushärten bzw. Verfestigen des Kunststoffs und der darin eingebetteten Fäden bzw. Fadenbündel kann der dicke bzw. stärker ausgebildete Endbereich der Verbundstruktur 12 im Umlenkbereich 18 nicht mehr aus der Aufnahmekammer 26 herausgezogen werden, da der daran anschließende Klemmkanal zwischen der Stützkontur 23 und der Klemmkontur 24 eine dazu geringere Querschnittsabmessung aufweist. Damit erreicht man eine mechanische Festlegung bzw. Halterung der beiden Endbereiche der Verbundstruktur 12 an dem ersten und zweiten Endstück 10, 11. So wird es möglich, auch hohe Axialkräfte zwischen den beiden Endstücken 10, 11 über die Verbundstruktur 12 übertragen zu können und so einen sehr stabilen Zusammenhalt in Axialrichtung zu erreichen.

Durch das Umformen der Wickelhilfselemente 17 jeweils in ihren den Basisteil 14 überragenden Endbereichen 29 hin in Richtung auf die Längsachse 9 werden damit die im Umlenkbereich 18 um die Wickelhilfselemente 17 herumgeführten Fäden der Verbundstruktur 12 zusätzlich in Axialrichtung vorgespannt. In dieser vorgespannten Position werden die so umgeformten Wickelhilfselemente 17 mit in die Verbundstruktur 12 eingebettet und in der Aufnahmekammer 26 aufgenommen.

Zusätzlich kann aber an der Außenseite der Tragstruktur 4, insbesondere der Verbundstruktur 12 ein Schutzelement in Form einer Hülle bzw. Hülse vorgesehen werden, um auch einen Schutz der im Kunststoff eingebetteten Fäden und damit der Verbundstruktur 12 zu erzielen. Diese Schutzhülle kann aus den unterschiedlichsten Werkstoffen, wie z.B. Kunststoff, Metall, Kompositbauteilen usw. gebildet sein. Dieses Schutzelement kann sich in Axialrichtung durchgehend zwischen den beiden Endstücken 10, 11 erstrecken und gegebenenfalls an diesen und/oder der Verbundstruktur 12 gehalten sein.

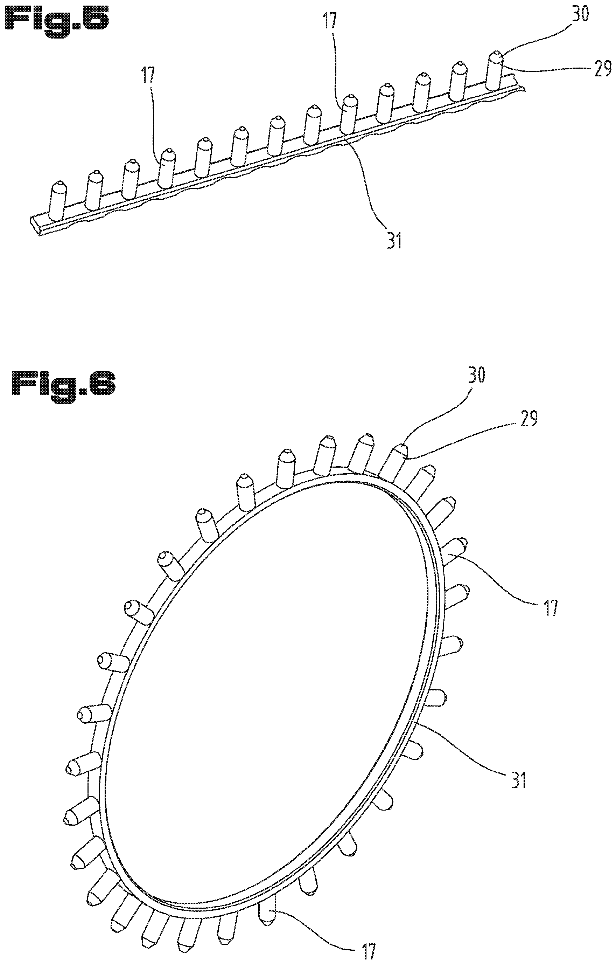

In der Fig. 5 ist eine und gegebenenfalls für sich eigenständige Ausführungsform der Wickelhilfselemente 17 und deren gegenseitige Halterung gezeigt, wobei wiederum für gleiche Teile gleiche Bezugszeichen bzw. Bauteilbezeichnungen wie in den vorangegangen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Wie bereits zuvor beschrieben, dienen die einzelnen Wickelhilfselemente 17 dazu, über den Umfang verteilt an den Endstücken 10, 11, insbesondere dessen Basisteil 14, angeordnet zu sein. In der zuvor beschriebenen Ausführungsform gemäß der Fig. 2 bis 4 sind die einzelnen Wickelhilfselemente 17 in eigenen Aufnahmeöffnungen 28 im Endstück 10, 11, insbesondere dessen Basisteil 14, aufgenommen.

Im Gegensatz dazu sind bei dieser hier gezeigten Ausführungsform die Wickelhilfselemente 17 in einer Reihe hintereinander an einem durchlaufend angeordneten Verbindungselement 31 angeordnet und stehen von diesem ab. Das Verbindungselement 31 kann entweder in der entsprechenden Umfangslänge hergestellt oder aber auch von einer endlosen Rolle abgetrennt werden. Das Verbindungselement 31 kann dann in eine nicht näher dargestellte, ringförmig ausgebildete Aufnahmenut des Endstücks 10, 11, insbesondere dessen Basisteil 14, eingesetzt und daran gehalten werden. Eine zusätzliche Klemmung bzw. Halterung des Verbindungselements 31 am Endstück 10, 11 bzw. dessen Basisteil 14 kann ebenfalls erfolgen.

In der Fig. 6 ist eine weitere und gegebenenfalls für sich eigenständige Ausführungsform der Wickelhilfselemente 17 und deren gegenseitige Halterung gezeigt, wobei wiederum für gleiche Teile gleiche Bezugszeichen bzw. Bauteilbezeichnungen wie in den vorangegangen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Im Gegensatz zu der zuvor in der Fig. 5 beschriebenen Ausführungsform ist hier das Verbindungselement 31 ringförmig ausgebildet, wobei dann in Abhängigkeit vom Durchmesser bzw. der Größe des herzustellenden Zylindergehäuses 2 die Verbindungselemente 31 in der dafür notwendigen Umfangslänge durchgängig hergestellt werden. Zur Montage wäre es zusätzlich noch möglich, ein bereits ringförmig vorgeformtes Verbindungselement 31 einzusetzen, dieses jedoch in seinem Umfangsbereich einmal aufzutrennen, um so die Montage des Verbindungselements 31 mit den davon abstehenden Wickelhilfselementen 17 am Endstück 10, 11, insbesondere dessen Basisteil 14, zu erleichtern.

Der Ordnung halber sei abschließend darauf hingewiesen, dass zum besseren Verständnis des Aufbaus des Zylindergehäuses 2 sowie des Druckzylinders 1 dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten des Zylindergehäuses 2 sowie des Druckzylinders 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Vor allem können die einzelnen in den Fig. 1; 2, 3, 4; 5; 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Druckzylinder
- 2: Zylindergehäuse
- 3: Kolbenstange
- 4: Tragstruktur
- 5: Zylinderraum

- 6: Innenrohr
- 7: Ende
- 8: Ende
- 9: Längsachse
- 10: erstes Endstück

- 11: zweites Endstück
- 12: Verbundstruktur
- 13: Außenfläche
- 14: Basisteil
- 15: Klemmteil

- 16: Außenfläche
- 17: Wickelhilfselement
- 18: Umlenkbereich
- 19: Aufnahmeraum
- 20: Anlaufschräge

- 21: Übergangsabschnitt
- 22: Stützkurve
- 23: Stützkontur
- 24: Klemmkontur
- 25: Einlauferweiterung

- 26: Aufnahmekammer
- 27: Kanal
- 28: Aufnahmeöffnung
- 29: Endbereich
- 30: Fasenfläche

- 31: Verbindungselement

## Patentansprüche

1. Zylindergehäuse (2) für einen Druckzylinder (1), insbesondere für einen Hydraulikzylinder, Pneumatikzylinder oder Hydropneumatikzylinder, in Leichtbau-Mischbauweise mit
einer Tragstruktur (4) umfassend
ein Innenrohr (6), welches in Axialrichtung voneinander distanzierte Enden (7, 8) aufweist und sich zwischen diesen eine Längsachse (9) erstreckt,
sowie ein erstes und ein zweites Endstück (10, 11), welche jeweils im Bereich eines der Enden (7, 8) des Innenrohrs (6) angeordnet sind,
und mit einer Verbundstruktur (12) aus einem mit Fäden verstärkten Kunststoff, welche Verbundstruktur (12) an einer Außenfläche (13) des Innenrohrs (6) angeordnet ist, sich in Axialrichtung durchgehend zwischen dem ersten und zweiten Endstück (10, 11) erstreckt und mit diesen verbunden ist, und
an einer Außenfläche (16) des ersten und des zweiten Endstücks (10, 11) jeweils über deren Umfang verteilt mehrere über die Außenfläche (16) vorragende Wickelhilfselemente (17) angeordnet sind, die stabförmig ausgebildet sind, wobei die Wickelhilfselemente (17) eine derartige Festigkeit aufweisen, um beim Aufbringen der Fäden der Verbundstruktur (12) einen Wickelvorgang zu ermöglichen, bei dem einzelne der Fäden der Verbundstruktur (12) auf jeweils in Axialrichtung voneinander abgewendeten Seiten in einem Umlenkbereich (18) um zumindest eines der Wickelhilfselemente (17) herumgeführt sind,
**dadurch gekennzeichnet, dass**
nach der Ausbildung der Verbundstruktur (12) die Wickelhilfselemente (17) umgeformt und zumindest bereichsweise in die Verbundstruktur (12) eingebettet sind.

2. Zylindergehäuse (2) nach Anspruch 1, **dadurch gekennzeichnet, dass** das Endstück (10, 11) einen Basisteil (14) sowie einen relativ dazu verlagerbaren Klemmteil (15) umfasst und die Wickelhilfselemente (17) am Basisteil (14) des Endstücks (10, 11) angeordnet sind.

3. Zylindergehäuse (2) nach Anspruch 2, **dadurch gekennzeichnet, dass** in einer Klemmstellung zwischen dem Basisteil (14) und dem Klemmteil (15) ein umlaufender Aufnahmeraum (19) ausgebildet ist, in welchem die Verbundstruktur (12) sowie die umgeformten Wickelhilfselemente (17) aufgenommen sind.

4. Zylindergehäuse (2) nach Anspruch 2 oder 3, **dadurch gekennzeichnet, dass** im Axialschnitt gesehen das Basisteil (14) eine auf die vom Innenrohr (6) abgewendete Seite ansteigend verlaufende Anlaufschräge (20) aufweist, die in radialer Richtung von der Außenfläche (13) des Innenrohrs (6) distanziert verlaufend angeordnet ist und in einem Übergangsabschnitt (21) mit einer maximalen radialen Distanz bezüglich der Längsachse (9) in eine abfallend gekrümmt verlaufend ausgebildete Stützkurve (22) übergeht und dabei die Anlaufschräge (20), der Übergangsabschnitt (21) und die Stützkurve (22) eine sich über den Umfang erstreckende Stützkontur (23) ausbilden.

5. Zylindergehäuse (2) nach Anspruch 4, **dadurch gekennzeichnet, dass** im Axialschnitt gesehen das Klemmteil (15) zumindest in einem dem Übergangsabschnitt (21) sowie einem der daran anschließenden Teilabschnitt der Stützkurve (22) gegenüberliegenden Bereich eine parallel dazu auf die von der Längsachse (9) abgewendete Seite versetzt verlaufende Klemmkontur (24) aufweist, wobei das Ausmaß der radialen Versetzung in etwa einer Lagenstärke der Fäden der Verbundstruktur (12) entspricht.

6. Zylindergehäuse (2) Anspruch 5, **dadurch gekennzeichnet, dass** im Axialschnitt gesehen das Klemmteil (15) am Beginn seiner dem Übergangsabschnitt (21) gegenüberliegenden Klemmkontur (24) eine Einlauferweiterung (25) aufweist.

7. Zylindergehäuse (2) nach einem der Ansprüche 4 bis 6, **dadurch gekennzeichnet, dass** im Axialschnitt gesehen der Querschnitt eines Klemmkanals, welcher zwischen der Stützkontur (23) im Bereich von deren Übergangsabschnitt (21) und dem daran anschließenden Teilabschnitt der Stützkurve (22) sowie der davon in radialer Richtung versetzten Klemmkontur (24) ausgebildet ist, kleiner ausgebildet ist als der Querschnitt in dem in Axialrichtung davon distanzierten Umlenkbereich (18) der Fäden der Verbundstruktur (12) um die Wickelhilfselemente (17).

8. Zylindergehäuse (2) nach einem der Ansprüche 2 bis 6, **dadurch gekennzeichnet, dass** im Umlenkbereich (18) der Fäden der Verbundstruktur (12) um die Wickelhilfselemente (17) durch das Basisteil (14) und das Klemmteil (15) eine Aufnahmekammer (26) ausgebildet ist, und die Aufnahmekammer (26) über zumindest einen im Klemmteil (15) angeordneten Kanal (27) mit der äußeren Umgebung verbunden ist.

9. Zylindergehäuse (2) nach einem der vorhergehenden Ansprüche, **dadurch gekennzeichnet, dass** die Wickelhilfselemente (17) bezüglich der Längsachse (9) geneigt zu dieser angeordnet sind, wobei die Wickelhilfselemente (17) des ersten und die des zweiten Endstücks (10, 11) jeweils auf die voneinander abgewendete Seite ansteigend geneigt verlaufend ausgerichtet sind.

10. Zylindergehäuse (2) nach einem der vorhergehenden Ansprüche, **dadurch gekennzeichnet, dass** jedes der Wickelhilfselemente (17) einzeln in eine dafür am jeweiligen Endstück (10, 11), insbesondere an dessen Basisteil (14), ausgebildete Aufnahmeöffnung (28) eingesetzt und darin gehalten ist.

11. Zylindergehäuse (2) nach einem der Ansprüche 1 bis 9, **dadurch gekennzeichnet, dass** mehrere der Wickelhilfselemente (17) an einem durchgehenden Verbindungselement (31) über dessen Längserstreckung verteilt angeordnet sind, wobei das Verbindungselement (31) in einer ringförmig ausgebildeten Aufnahmenut des Endstücks (10, 11), insbesondere dessen Basisteils (14), eingesetzt und gehalten ist.

12. Zylindergehäuse (2) nach einem der Ansprüche 1, 9 bis 11, **dadurch gekennzeichnet, dass** das Wickelhilfselement (17) an seinem vom Endstück (10, 11), insbesondere von dessen Basisteil (14), abgewendeten Endbereich (29) eine Abfasung mit einer Fasenfläche (30) aufweist, wobei im Axialschnitt gesehen die Fasenfläche (30) an ihrer von der Längsachse (9) abgewendeten Seite vor der Umformung der Wickelhilfselemente (17) in etwa parallel bezüglich der am Basisteil (14) des Endstücks (10, 11) ausgebildeten Anlaufschräge (20) verlaufend ausgerichtet ist.

13. Druckzylinder (1) mit einem Zylindergehäuse (2) in Leichtbau-Mischbauweise, einem im Zylindergehäuse (2) angeordneten Kolben und einer mit dem Kolben verbundenen Kolbenstange (3), **dadurch gekennzeichnet, dass** das Zylindergehäuse (2) nach einem der Ansprüche 1 bis 12 ausgebildet ist.

14. Verfahren zur Herstellung eines Zylindergehäuses (2) für einen Druckzylinder (1), insbesondere für einen Hydraulikzylinder, Pneumatikzylinder oder Hydropneumatikzylinder, in Leichtbau-Mischbauweise bei dem
eine Tragstruktur (4) umfassend
- ein Innenrohr (6), mit in Axialrichtung voneinander distanzierte Enden (7, 8),
- ein erstes und ein zweites Endstück (10, 11),
- sowie eine Verbundstruktur (12) gebildet wird,
und dabei das erste und zweite Endstück (10, 11) jeweils im Bereich eines der Enden (7, 8) des Innenrohrs (6) angeordnet werden und
die Verbundstruktur (12) aus einem mit Fäden verstärkten Kunststoff gebildet wird, welche an einer Außenfläche (13) des Innenrohrs (6) aufgebracht wird, wobei die Verbundstruktur (12) sich in Axialrichtung durchgehend zwischen dem ersten und zweiten Endstück (10, 11) erstreckend ausgebildet und mit dem ersten und zweiten Endstück (10, 11) verbunden wird, und
an einer Außenfläche (16) des ersten und des zweiten Endstücks (10, 11) jeweils über deren Umfang verteilt mehrere über die Außenfläche (16) vorragende Wickelhilfselemente (17) angeordnet werden, wobei die Wickelhilfselemente (17) mit einer stabförmigen Form ausgebildet werden, und die Wickelhilfselemente (17) mit einer derartigen Festigkeit ausgebildet werden, um so mittels eines Wickelvorgangs die Fäden der Verbundstruktur (12) aufzubringen, bei dem einzelne der Fäden auf jeweils in Axialrichtung voneinander abgewendeten Seiten in einem Umlenkbereich (18) um zumindest eines der Wickelhilfselemente (17) herumgeführt werden,
**dadurch gekennzeichnet, dass**
nach dem Aufbringen der Verbundstruktur (12) die Wickelhilfselemente (17) durch Umformen zumindest bereichsweise mit in die Verbundstruktur (12) eingebettet werden.

15. Verfahren nach Anspruch 14, **dadurch gekennzeichnet, dass** das Endstück (10, 11) durch einen Basisteil (14) sowie einen relativ dazu verlagerbaren Klemmteil (15) gebildet wird und die Wickelhilfselemente (17) am Basisteil (14) des Endstücks (10, 11) angeordnet werden.

16. Verfahren nach Anspruch 14 oder 15, **dadurch gekennzeichnet, dass** nach dem Aufbringen der Fäden der Verbundstruktur (12) das Klemmteil (15) relativ bezüglich des Basisteils (14) in Axialrichtung soweit verlagert wird, bis eine Klemmstellung zwischen dem Basisteil (14) und dem Klemmteil (15) erreicht wird, bei welcher ein umlaufender Aufnahmeraum (19) zwischen dem Basisteil (14) und dem Klemmteil (15) ausgebildet wird, wobei während der Axialverlagerung des Klemmteils (15) die Wickelhilfselemente (17) vom Klemmteil (15) umgeformt werden.

17. Verfahren nach einem der Ansprüche 14 bis 16, **dadurch gekennzeichnet, dass** die Wickelhilfselemente (17) jeweils mit ihren das Endstück (10, 11), insbesondere dessen Basisteil (14), überragenden Endbereichen (29) hin in Richtung auf die Längsachse (9) umgeformt werden und damit die im Umlenkbereich (18) um die Wickelhilfselemente (17) herumgeführten Fäden der Verbundstruktur (12) in Axialrichtung vorgespannt werden.

18. Verfahren nach einem der Ansprüche 15 bis 17, **dadurch gekennzeichnet, dass** in dem zwischen dem Basisteil (14) und dem Klemmteil (15) ausgebildeten Aufnahmeraum (19) die Verbundstruktur (12) sowie die bei der Axialverlagerung umgeformten Wickelhilfselemente (17) aufgenommen werden.

19. Verfahren nach einem der Ansprüche 15 bis 18, **dadurch gekennzeichnet, dass** nach dem Umformen der Wickelhilfselemente (17) und dem Erreichen der Klemmstellung zwischen dem Basisteil (14) und dem Klemmteil (15) das die Fäden umgebende Kunststoffmaterial verfestigt wird.

## Claims

1. A cylinder housing (2) for a pressure cylinder (1), in particular for a hydraulic cylinder, pneumatic cylinder or hydro-pneumatic cylinder, of lightweight hybrid construction comprising
a support structure (4) comprising
an inner tube (6) with ends (7, 8) that are spaced apart from one another in the axial direction and a longitudinal axis (9) extending between them,
and a first and a second end piece (10, 11) disposed respectively in the region of one of the ends (7, 8) of the inner tube (6),
and having a composite structure (12) consisting of a plastics material reinforced by threads, which composite structure (12) is disposed on an outer surface (13) of the inner tube (6), extends continuously in the axial direction between the first and second end pieces (10, 11) and is joined to the latter, and
a plurality of rod-shaped winding aids (17) are disposed on an outer surface (16) of the first and second end pieces (10, 11) distributed respectively around the circumference thereof and protruding from the outer surface (16), the winding aids (17) having sufficient strength to allow a winding operation as the threads of the composite structure (12) are applied, whereby individual threads of the composite structure (12) are guided around at least one of the winding aids (17) in a deflection region (18) on sides respectively facing away from one another in the axial direction,
**characterised in that**
following the formation of the composite structure (12), the winding aids (17) are reshaped and at least regionally embedded in the composite structure (12).

2. The cylinder housing (2) according to claim 1, **characterised in that** the end piece (10, 11) comprises a base part (14) and a clamping part (15) that is displaceable relative thereto, and the winding aids (17) are disposed on the base part (14) of the end piece (10, 11).

3. The cylinder housing (2) according to claim 2, **characterised in that** a circumferentially extending accommodating chamber (19) is formed in a clamped position between the base part (14) and the clamping part (15), in which the composite structure (12) and the reshaped winding aids (17) are accommodated.

4. The cylinder housing (2) according to claim 2 or 3, **characterised in that**, as viewed in axial section, the base part (14) has an inclination (20) extending upwards towards the side remote from the inner tube (6), which inclination extends in the radial direction at a distance from the outer surface (13) of the inner tube (6) and, in a transition section (21) at a maximum radial distance from the longitudinal axis (9), merges into a supporting curve (22) extending in a downwardly curved manner, and the inclination (20), transition section (21) and supporting curve (22) form a supporting contour (23) extending around the circumference.

5. The cylinder housing (2) according to claim 4, **characterised in that**, as viewed in axial section, the clamping part (15) has, at least in a region lying opposite the transition section (21) and a part-portion of the supporting curve (22) adjoining said transition section, a clamping contour (24) extending parallel therewith in an offset manner towards the side remote from the longitudinal axis (9), and the extent of the radial offset approximately corresponds to a thickness of the layers of threads of the composite structure (12).

6. The cylinder housing (2) according to claim 5, **characterised in that**, as viewed in axial section, the clamping part (15) has a widened lead-in portion (25) at the start of the clamping contour (24) thereof that lies opposite the transition section (21).

7. The cylinder housing (2) according to one of claims 4 to 6, **characterised in that**, as viewed in axial section, the cross-section of a clamping passage formed between the supporting contour (23) in the region of the transition section (21) thereof and the part-portion of the supporting curve (22) adjoining it as well as the clamping contour (24) offset therefrom in the radial direction is smaller than the cross-section in the deflection region (18) spaced apart therefrom in the axial direction where the threads of the composite structure (12) are wound around the winding aids (17).

8. The cylinder housing (2) according to one of claims 2 to 6, **characterised in that**, in the deflection region (18) where the threads of the composite structure (12) are wound around the winding aids (17), an accommodating chamber (26) is formed by the base part (14) and clamping part (15), and the accommodating chamber (26) communicates with the external environment via at least one passage (27) disposed in the clamping part (15).

9. The cylinder housing (2) according to one of the preceding claims, **characterised in that** the winding aids (17) are disposed at an angle with respect to the longitudinal axis (9) and the winding aids (17) of the first and those of the second end pieces (10, 11) each extend in an upwardly inclined manner towards the sides facing away from one another.

10. The cylinder housing (2) according to one of the preceding claims, **characterised in that** each of the winding aids (17) is inserted individually into an orifice (28) provided therefor in the respective end piece (10, 11), in particular in the base part (14) thereof, and is retained therein.

11. The cylinder housing (2) according to one of claims 1 to 9, **characterised in that** several of the winding aids (17) are disposed on a continuous connecting element (31) distributed across the longitudinal extension thereof, and the connecting element (31) is inserted in an annular receiving groove of the end piece (10, 11), in particular the base part (14) thereof, and is retained therein.

12. The cylinder housing (2) according to one of claims 1, 9 to 11, **characterised in that** the winding aid (17) has a bevel with a bevel surface (30) on its end region (29) facing away from the end piece (10, 11), in particular from its base part (14), and, as viewed in axial section, on its side facing away from the longitudinal axis (9), the bevel surface (30) extends approximately parallel with the inclination (20) formed on the base part (14) of the end piece (10, 11) before the winding aids (17) are reshaped.

13. A pressure cylinder (1) comprising a cylinder housing (2) of lightweight hybrid construction, a piston disposed in the cylinder housing (2) and a piston rod (3) connected to the piston, **characterised in that** the cylinder housing (2) is formed according to one of claims 1 to 12.

14. A method of producing a cylinder housing (2) for a pressure cylinder (1), in particular for a hydraulic cylinder, pneumatic cylinder or hydro-pneumatic cylinder, of lightweight hybrid construction in which
a support structure (4) is formed comprising
- an inner tube (6) with ends (7, 8) spaced apart from one another in the axial direction,
- a first and a second end piece (10, 11),
- and a composite structure (12),
the first and second end piece (10, 11) being disposed respectively in the region of one of the ends (7, 8) of the inner tube (6) and
the composite structure (12) is formed from a plastics material reinforced by threads and is applied to an outer surface (13) of the inner tube (6), and the composite structure (12) extends continuously in the axial direction between the first and second end pieces (10, 11) and is joined to the first and second end pieces (10, 11), and
a plurality of winding aids (17) are disposed on an outer surface (16) of the first and second end pieces (10, 11) distributed respectively around the circumference thereof protruding from the outer surface (16), and the winding aids (17) are of a rod-shaped design, and the winding aids (17) are designed to have a sufficient strength to allow the threads of the composite structure (12) to be applied by means of a winding operation whereby individual threads are guided around at least one of the winding aids (17) in a deflection region (18) on sides respectively facing away from one another in the axial direction,
**characterised in that**
after the application of the composite structure (12), the winding aids (17) are at least regionally embedded in the composite structure (12) by reshaping.

15. The method according to claim 14, **characterised in that** the end piece (10, 11) is formed by a base part (14) and a clamping part (15) that is displaceable relative thereto and the winding aids (17) are disposed on the base part (14) of the end piece (10, 11).

16. The method according to claim 14 or 15, **characterised in that**, after the application of the threads of the composite structure (12), the clamping part (15) is displaced relative to the base part (14) in the axial direction until a clamped position is obtained between the base part (14) and the clamping part (15) in which a circumferentially extending accommodating chamber (19) is formed between the base part (14) and clamping part (15), and the winding aids (17) are reshaped by the clamping part (15) during the axial displacement of the clamping part (15).

17. The method according to one of claims 14 to 16, **characterised in that** the winding aids (17) are reshaped respectively by their end regions (29) protruding from the end piece (10, 11), in particular the base part (14) thereof, in the direction towards the longitudinal axis (9) and the threads of the composite structure (12) wound around the winding aids (17) in the deflection region (18) are thus tautened in the axial direction.

18. The method according to one of claims 15 to 17, **characterised in that** the composite structure (12) and the winding aids (17) reshaped by the axial displacement are accommodated in the accommodating chamber (19) formed between the base part (14) and the clamping part (15).

19. The method according to one of claims 15 to 18, **characterised in that**, after the winding aids (17) are reshaped and the clamped position between the base part (14) and clamping part (15) is reached, the plastics material surrounding the threads is solidified.

## Revendications

1. Carter de cylindre (2) pour un cylindre de pression (1), en particulier pour un vérin hydraulique, un vérin pneumatique ou un vérin hydro-pneumatique, d'une construction mixte et légère, avec
une structure de support (4) comprenant
un tube intérieur (6) ayant des extrémités (7, 8) qui sont espacées l'une de l'autre dans la direction axiale et un axe longitudinal (9) s'étendant entre celles-ci,
et des première et seconde pièces d'extrémité (10, 11) qui sont disposées respectivement dans la zone de l'une des extrémités (7, 8) du tube intérieur (6),
et ayant une structure composite (12) constituée d'une matière plastique renforcée de fils, laquelle structure composite (12) est disposée sur une surface extérieure (13) du tube intérieur (6) s'étendant de manière continue dans la direction axiale entre les première et seconde pièces d'extrémité (10, 11) et étant reliée à ces dernières, et
plusieurs aides à l'enroulement (17), qui sont réalisées en forme de tige, agencées sur une surface extérieure (16) des première et seconde pièces d'extrémité (10, 11), réparties respectivement autour de leur circonférence et faisant saillie à partir de la surface extérieure (16), les aides à l'enroulement (17) ayant une résistance suffisante pour permettre une opération d'enroulement lorsque les fils de la structure composite (12) sont appliqués, de sorte que des fils individuels de la structure composite (12) sont enroulés autour d'au moins une des aides à l'enroulement (17) dans une zone de déviation (18) sur des côtés orientés respectivement à l'opposé l'un de l'autre dans la direction axiale,
**caractérisé en ce que**
après la formation de la structure composite (12), les aides à l'enroulement (17) sont retravaillées et enrobées dans la structure composite (12) au moins par endroits.

2. Carter de cylindre (2) selon la revendication 1, **caractérisé en ce que** la pièce d'extrémité (10, 11) comporte une partie de base (14) et une pièce de serrage (15) qui est déplaçable par rapport à celle-ci, et les aides à l'enroulement (17) sont disposées sur la partie de base (14) de la pièce d'extrémité (10, 11).

3. Carter de cylindre (2) selon la revendication 2, **caractérisé en ce que** une chambre de réception s'étendant circonférentiellement (19) est formée dans une position serrée entre la partie de base (14) et la partie de serrage (15), dans laquelle la structure composite (12) et les aides à l'enroulement retravaillées (17) sont reçues.

4. Carter de cylindre (2) selon la revendication 2 ou 3, **caractérisé en ce qu'**en regardant en coupe axiale, la partie de base (14) a une inclinaison (20) s'étendant vers le haut en direction du côté opposé au tube intérieur (6), qui est agencée s'étendant dans la direction radiale à une distance de la surface extérieure (13) du tube intérieur (6) et, dans une section de transition (21) à une distance radiale maximum de l'axe longitudinal (9), se fond dans une courbe de support (22) réalisée s'étendant de manière incurvée vers le bas, et l'inclinaison (20), la section de transition (21) et la courbe de support (22) forment un contour de support (23) s'étendant autour de la circonférence.

5. Carter de cylindre (2) selon la revendication 4, **caractérisé en ce qu'**en regardant en coupe axiale, la partie de serrage (15) a, au moins dans une zone se trouvant opposée à la section de transition (21) et à une section partielle de la courbe de support (22) adjacente à celle-ci, un contour de serrage (24) parallèle à celle-ci s'étendant selon un agencement décalé sur le côté opposé à l'axe longitudinal (9), et la dimension du décalage radial correspond approximativement à une épaisseur de couche des fils de la structure composite (12).

6. Carter de cylindre (2) selon la revendication 5, **caractérisé en ce qu'**en regardant en coupe axiale, la partie de serrage (15) comprend un élargissement d'entrée (25) au début de son contour de serrage (24) se trouvant opposé à la section de transition (21).

7. Carter de cylindre (2) selon l'une quelconque des revendications 4 à 6, **caractérisé en ce qu'**en regardant en coupe axiale, la section transversale d'un canal de serrage, qui est agencé entre le contour de support (23), dans la zone de sa section de transition (21) et de la section partielle de la courbe de support (22) adjacente à celle-ci, et le contour de serrage (24), décalé par rapport à celui-ci dans la direction radiale, est réalisée inférieure à la section transversale dans la zone de déviation (18), espacée de celui-ci dans la direction axiale, où les fils de la structure composite (12) sont enroulés autour des aides à l'enroulement (17).

8. Carter de cylindre (2) selon l'une quelconque des revendications 2 à 6, **caractérisé en ce que** dans la zone de déviation (18) où les fils de la structure composite (12) sont enroulés autour des aides à l'enroulement (17), une chambre de réception (26) est formée par la partie de base (14) et la partie de serrage (15), et la chambre de réception (26) est reliée à l'environnement extérieur via au moins un passage (27) disposé dans la partie de serrage (15).

9. Carter de cylindre (2) selon l'une quelconque des revendications précédentes, **caractérisé en ce que** les aides à l'enroulement (17), par rapport à l'axe longitudinal (9), sont disposées sur un angle par rapport à ce dernier, et les aides à l'enroulement (17) respectives des première et seconde pièces d'extrémité (10, 11) s'étendent selon un agencement incliné vers le haut respectivement vers les côtés opposés l'un à l'autre.

10. Carter de cylindre (2) selon l'une quelconque des revendications précédentes, **caractérisé en ce que** chacune des aides à l'enroulement (17) est insérée individuellement dans une ouverture de réception (28) agencée dans ce but dans la pièce d'extrémité respective (10, 11), en particulier dans sa partie de base (14), et y est retenue.

11. Carter de cylindre (2) selon l'une quelconque des revendications 1 à 9, **caractérisé en ce que** plusieurs des aides à l'enroulement (17) sont agencées sur un élément de liaison continue (31) réparties sur son étendue longitudinale, dans lequel l'élément de liaison (31) est inséré dans une gorge de réception annulaire de la pièce d'extrémité (10, 11), en particulier sa partie de base (14), et y est retenu.

12. Carter de cylindre (2) selon l'une quelconque des revendications 1, 9 à 11, **caractérisé en ce que** l'aide à l'enroulement (17) présente un chanfrein avec une surface de chanfrein (30) sur sa zone d'extrémité (29) opposée à la pièce d'extrémité (10, 11), en particulier à sa partie de base (14), dans lequel en regardant en coupe axiale, sur son côté opposé à l'axe longitudinal (9), la surface de chanfrein (30) s'étend approximativement parallèle par rapport à l'inclinaison (20) agencée sur la partie de base (14) de la pièce d'extrémité (10,11) avant que les aides à l'enroulement (17) soient retravaillées.

13. Cylindre de pression (1) comportant un carter de cylindre (2) d'une construction mixte légère, un piston agencé dans le carter de cylindre (2) et une tige de piston (3) reliée au piston, **caractérisé en ce que** le carter de cylindre (2) est réalisé selon l'une quelconque des revendications 1 à 12.

14. Procédé de fabrication d'un carter de cylindre (2) pour un cylindre d'impression (1), notamment pour un vérin hydraulique, un vérin pneumatique ou un vérin hydro-pneumatique, dans une construction mixte et légère par l'intermédiaire d'une structure de support (4), comprenant :
- un tube intérieur (6) ayant des extrémités (7, 8) qui sont espacées l'une de l'autre dans la direction axiale,
- des première et seconde pièces d'extrémité (10, 11),
- et une structure composite (12) qui va être formée,
où les première et seconde pièces d'extrémité (10, 11) sont agencées respectivement dans la zone de l'une des extrémités (7, 8) du tube intérieur (6), et
la structure composite (12) est formée d'une matière plastique renforcée de fils, laquelle est disposée sur une surface extérieure (13) du tube intérieur (6), dans lequel la structure composite (12) est réalisée s'étendant en continu dans la direction axiale entre les première et seconde pièces d'extrémité (10, 11) et étant reliée à ces dernières, et plusieurs aides à l'enroulement (17), qui sont réalisées en forme de tige, agencées sur une surface extérieure (16) des première et seconde pièces d'extrémité (10, 11), réparties respectivement autour de leur circonférence et faisant saillie à partir de la surface extérieure (16), les aides à l'enroulement (17) ayant une résistance suffisante pour permettre une opération d'enroulement lorsque les fils de la structure composite (12) sont appliqués, de sorte que des fils individuels de la structure composite (12) sont enroulés autour d'au moins une des aides à l'enroulement (17) dans une zone de déviation (18) sur des côtés orientés respectivement à l'opposé l'un de l'autre dans la direction axiale,
**caractérisé en ce que**
après la formation de la structure composite (12), les aides à l'enroulement (17) sont retravaillées et enrobées dans la structure composite (12) au moins par endroits.

15. Procédé selon la revendication 14, **caractérisé en ce que** la pièce d'extrémité (10, 11) est formée par une partie de base (14) et une pièce de serrage (15) qui est déplaçable par rapport à celle-ci, et les aides à l'enroulement (17) sont disposées sur la partie de base (14) de la pièce d'extrémité (10, 11).

16. Procédé selon la revendication 14 ou 15, **caractérisé en ce qu'**après l'application des fils de la structure composite (12), la partie de serrage (15) est déplacée par rapport à la partie de base (14) dans la direction axiale jusqu'à ce qu'une position serrée entre la partie de base (14) et la partie de serrage (15) soit atteinte, de sorte qu'une chambre de réception s'étendant circonférentiellement (19) est formée entre la partie de base (14) et la partie de serrage (15), dans lequel les aides à l'enroulement (17) sont retravaillées par la partie de serrage (15) pendant le déplacement axial de la partie de serrage (15).

17. Procédé selon l'une quelconque des revendications 14 à 16, **caractérisé en ce que** les aides à l'enroulement (17) sont retravaillées respectivement par leurs zones d'extrémité (29) faisant saillie à partir de la pièce extrémité (10, 11), en particulier leur partie de base (14), dans la direction de l'axe longitudinal (9), et les fils de la structure composite (12) enroulés autour des aides à l'enroulement (17) dans la zone de déviation (18) sont ainsi serrés dans la direction axiale.

18. Procédé selon l'une quelconque des revendications 15 à 17, **caractérisé en ce que** la structure composite (12) et les aides à l'enroulement (17) retravaillées par le déplacement axial sont reçues dans la chambre de réception (19) formée entre la partie de base (14) et la partie de serrage (15).

19. Procédé selon l'une quelconque des revendications 15 à 18, **caractérisé en ce qu'**après que les aides à l'enroulement (17) aient été retravaillées et lorsque la position serrée entre la partie de base (14) et la partie de serrage (15) est atteinte, la matière plastique entourant les fils est solidifiée.
